# EUROPEAN PATENT APPLICATION

(11) **EP 4 643 977 A1**
(43) Date of publication of application: **05.11.2025**
(21) Application number: 25166795.2
(22) Date of filing: 27.03.2025
(51) Int. Cl.: B01D 53/26, F04C 29/00

(54) **DESICCANT SHIPPING CAP**

(30) Priority: 01.05.2024 US 202463640994 P
(71) Applicant: Mahle International GmbH, 70376 Stuttgart (DE)
(72) Inventor: Moran, Steven, Williamsville, NY, 14221 (US)

(57) **Abstract**

An apparatus and method for transportation and storage of equipment is disclosed herein. The apparatus consists of a shipping cap that is configured to be inserted into the inlet and outlet portions of the piece of rotating equipment. The shipping cap is configured to accept a desiccant and insert this desiccant into the inlet and outlet portions of the equipment to prevent moisture intrusion.

## Description

### CROSS-REFERENCE TO RELATED APPLICATIONS

This application claims priority from United States Provisional Application No. 63/640,994, filed on May 1, 2024, the entirety of which is hereby incorporated by reference herein.

### BACKGROUND

Compressors, motors, pumps, and other rotating equipment, when shipped from manufacturers, generally have plugs in the inlet and outlet ports. The equipment may also be stored for prolonged periods of time in storage facilities prior to being installed. These plugs prevent moisture from seeping into the internal mechanisms and oxidizing or otherwise damaging the internal mechanisms. However, these plugs are not watertight or airtight, and may only consist of a friction fit in the inlet and outlet ports. As such, over time, moisture may seep into the internal mechanisms.

This application relates to removable shipping cap with a desiccant. When the shipping cap is inserted into the inlet and outlet ports of compressors, motors, pumps, and other equipment for either transportation or storage, the desiccant is captured within the inlet and outlet ports. The desiccant ensures any moisture that seeps into the internal mechanisms is absorbed prior to reaching the internal mechanisms. Additionally, the desiccant may be replaceable.

### SUMMARY OF THE INVENTION

A first representative embodiment of the disclosure is provided. The embodiment includes an apparatus for sealing a port of a piece of rotating equipment. The apparatus includes a base having a first side and a second side; a handle connected to a first side of the base; a locating protrusion connected to a first side of the base; and a desiccant receptacle connected to a second side of the base; wherein the desiccant receptacle is configured to accept a desiccant.

Another representative embodiment of the disclosure is provided. The embodiment includes a method for controlling moisture in a piece of rotating equipment. The method includes providing a shipping cap configured to form a seal; and wherein the shipping cap comprises: a base having a first side and a second side; a handle connected to a first side of the base; a locating protrusion connected to a first side of the base; and a desiccant receptacle connected to a second side of the base; wherein the desiccant receptacle is configured to accept a desiccant; the method further comprises inserting the shipping cap into an inlet or an outlet port on a piece of rotating equipment.

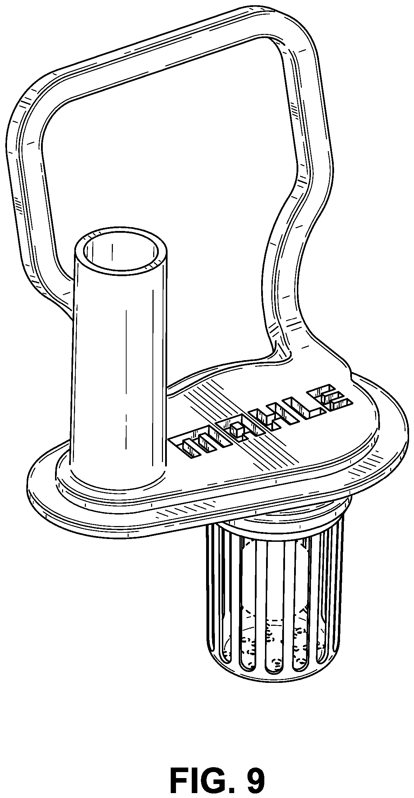

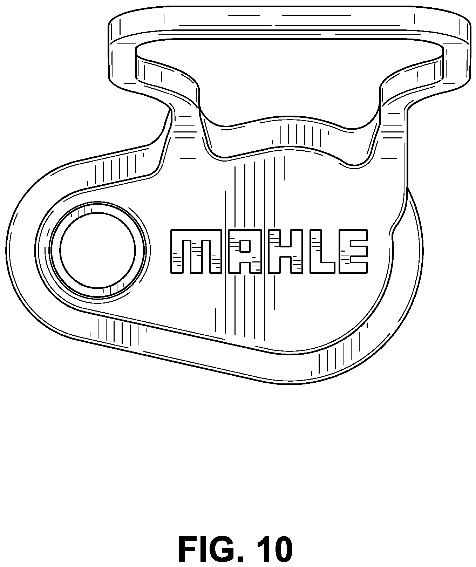

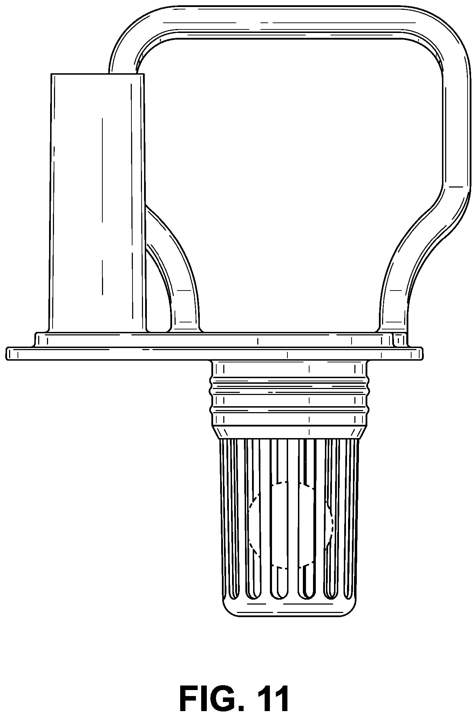

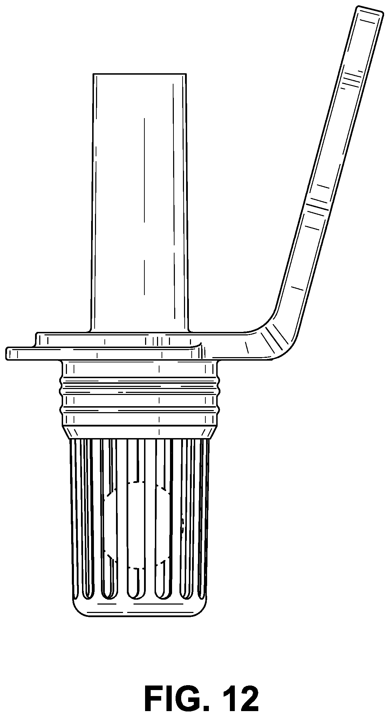

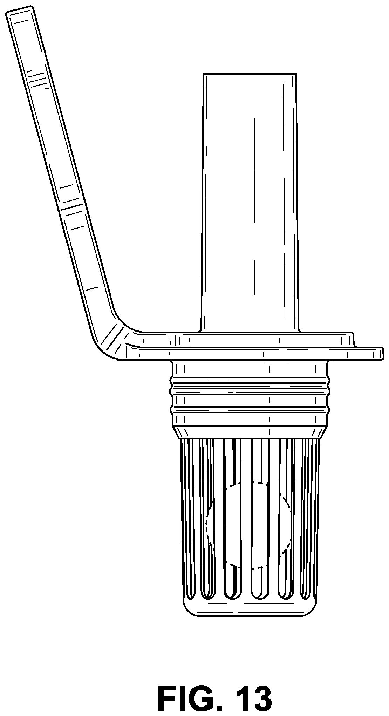

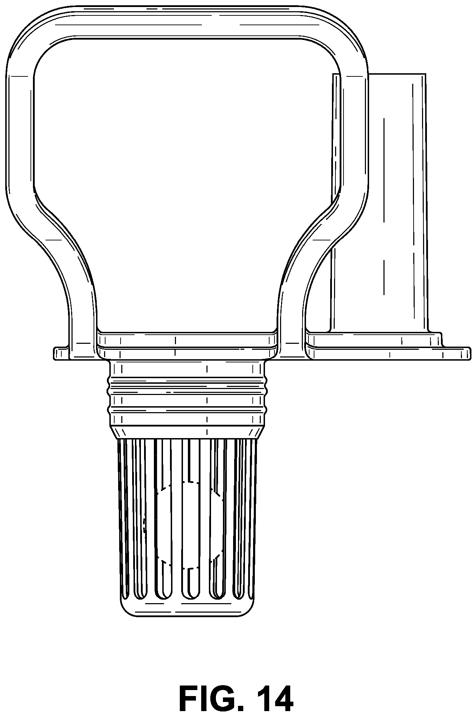

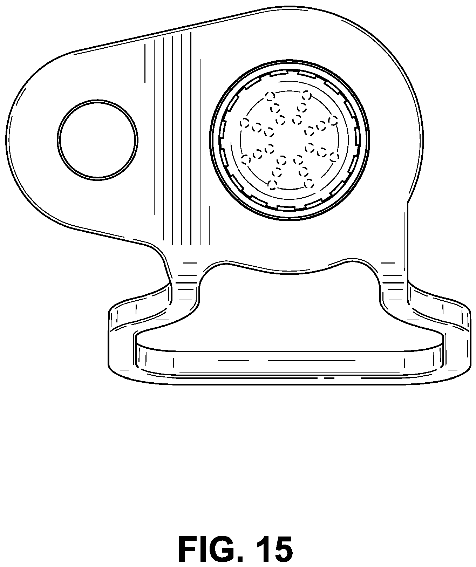

Another representative embodiment is the ornamental design that is depicted in FIGs. 9-16.

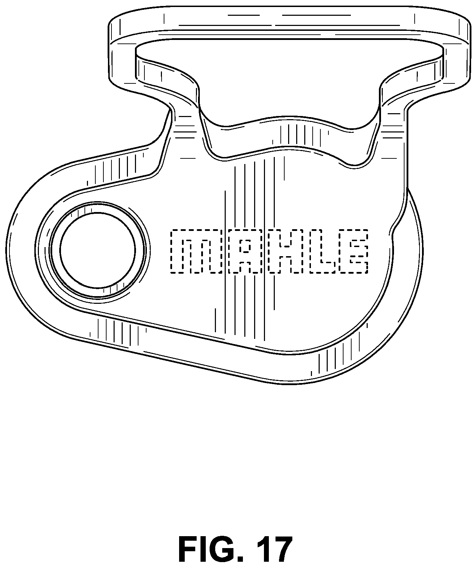

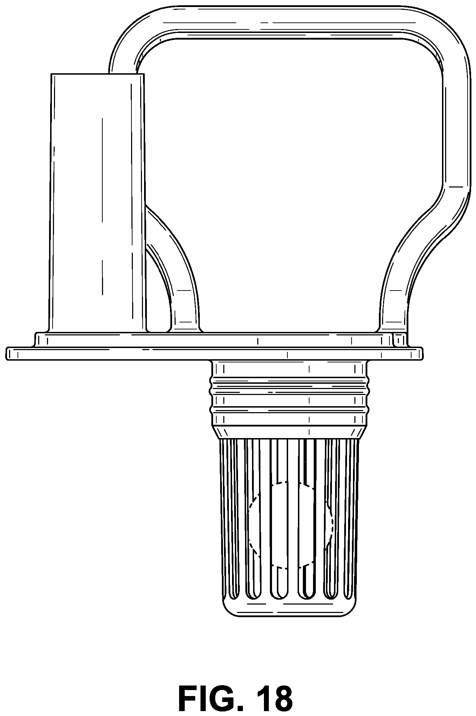

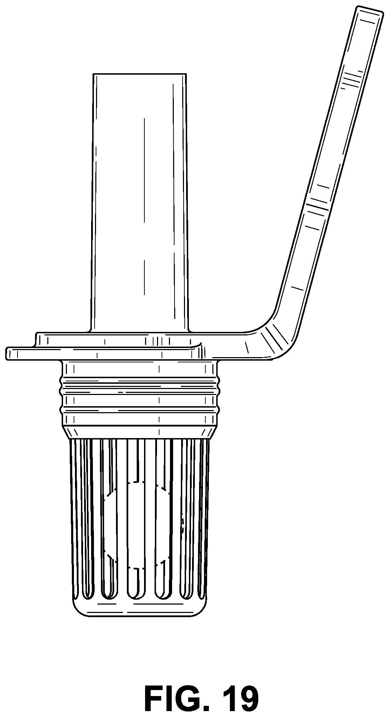

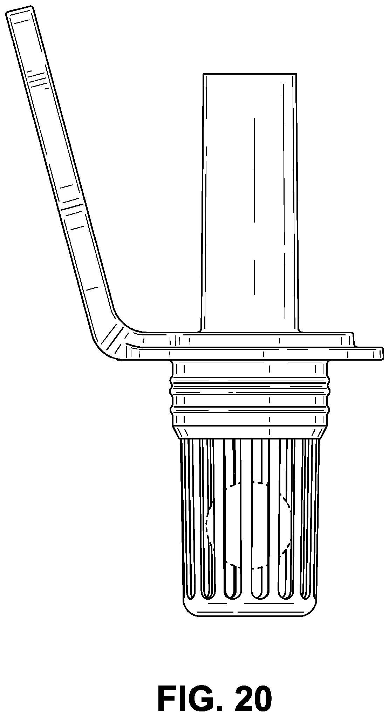

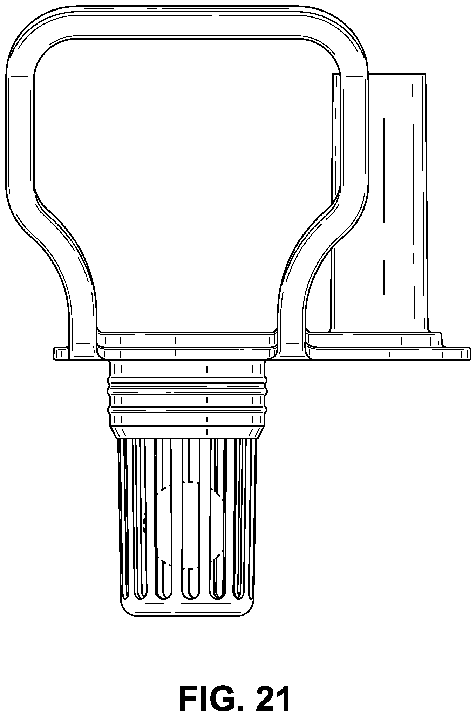

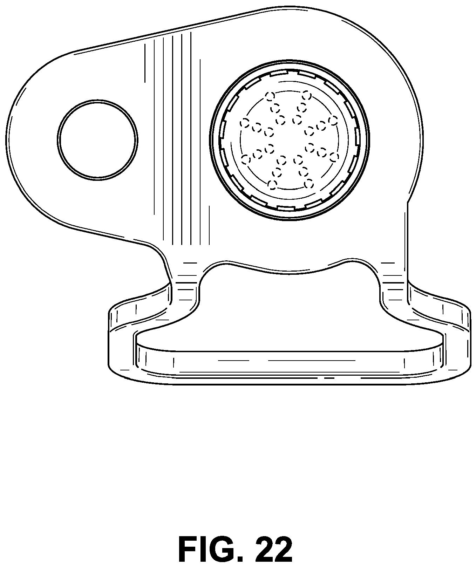

Another representative embodiment is the ornamental design that is depicted in FIGs. 17-22.

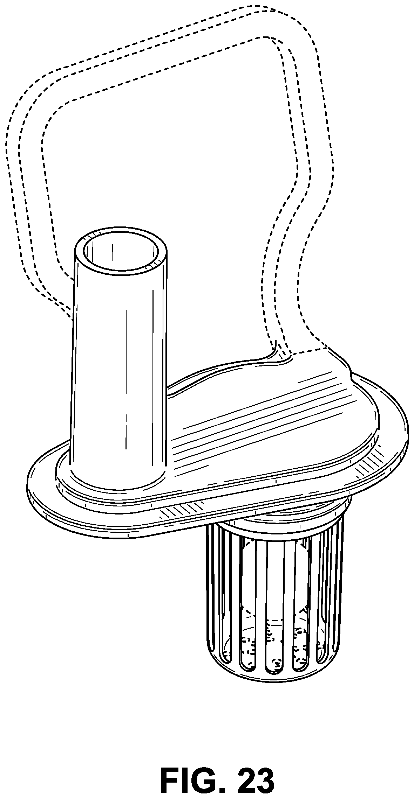

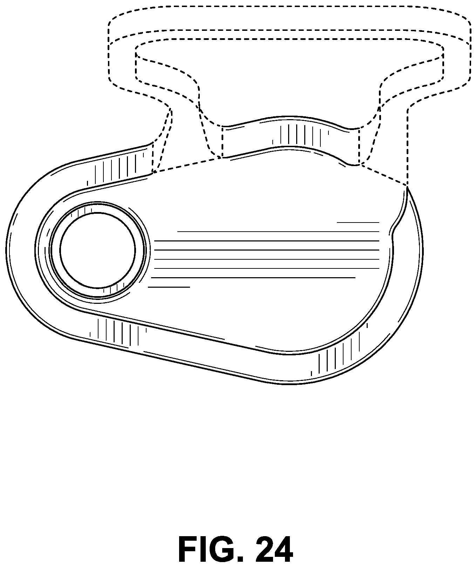

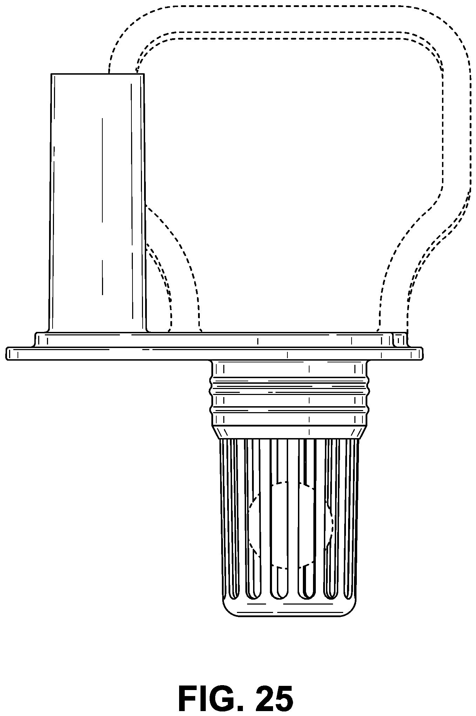

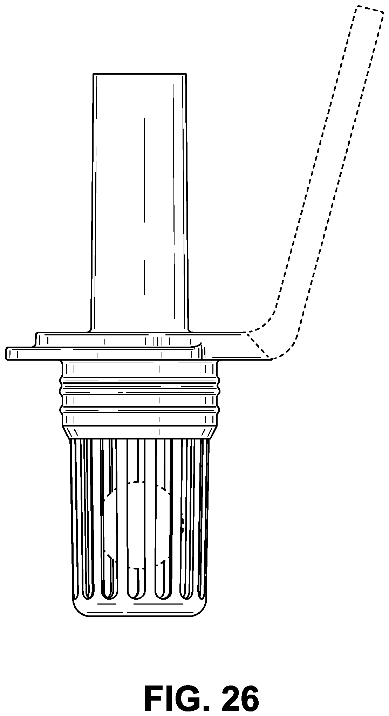

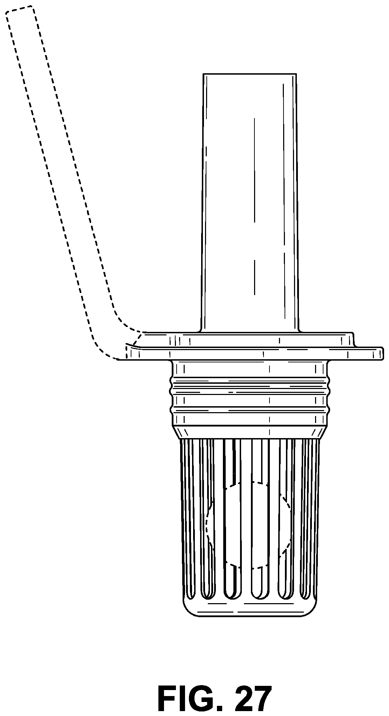

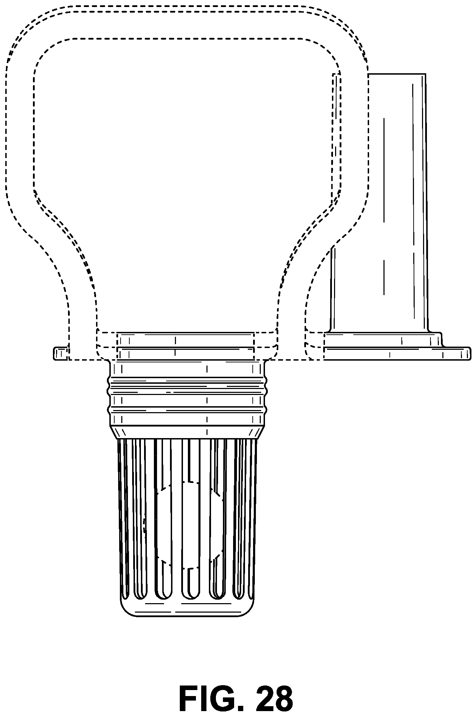

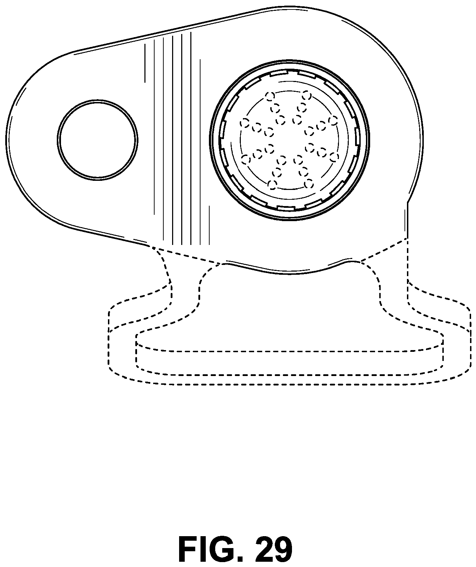

Another representative embodiment is the ornamental design that is depicted in FIGs. 23-29.

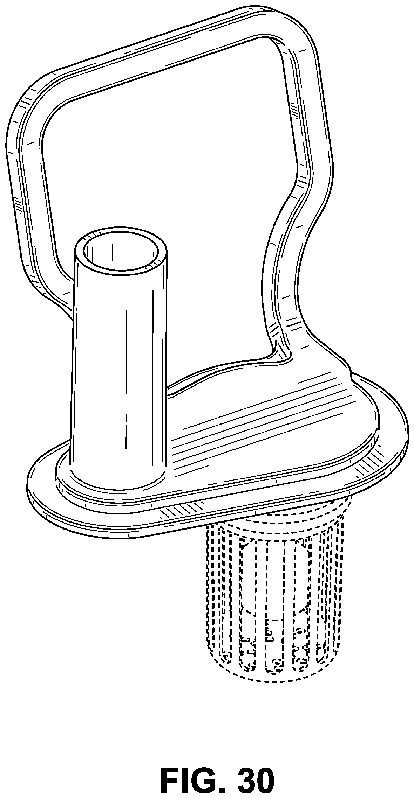

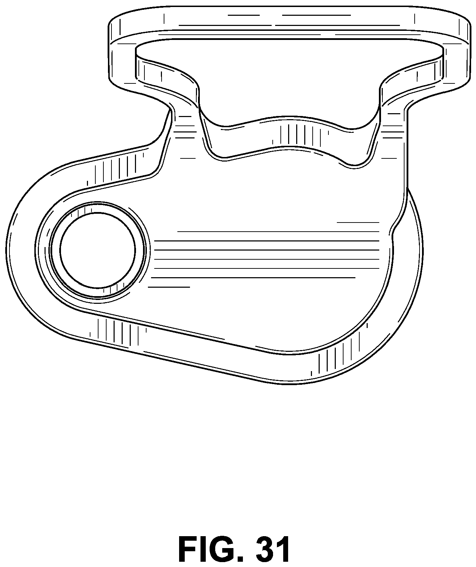

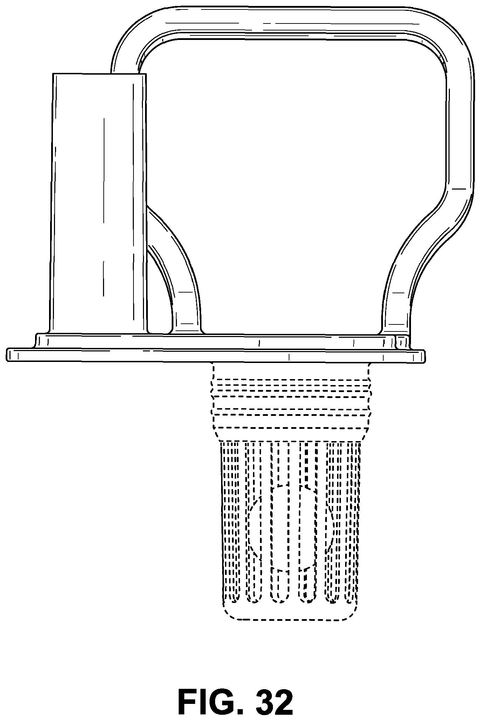

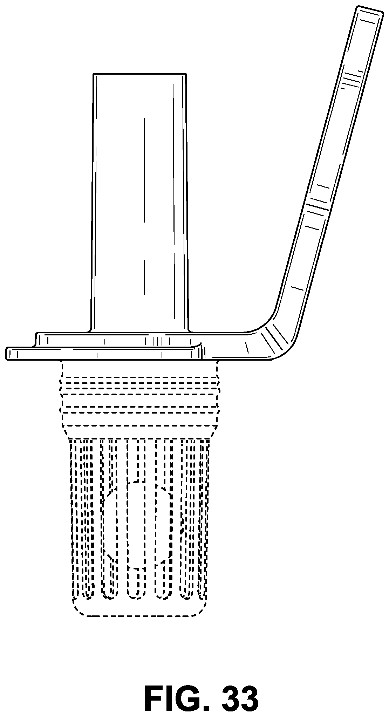

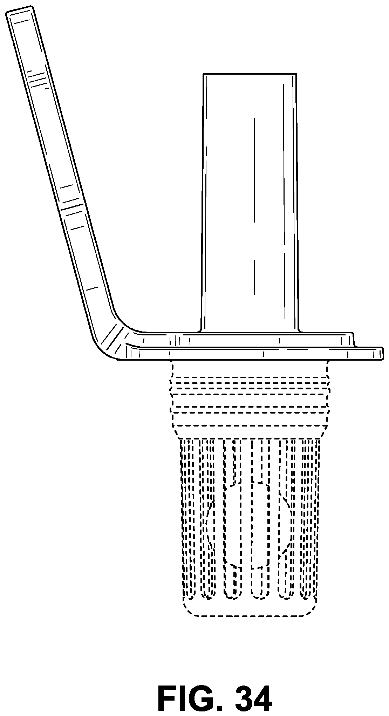

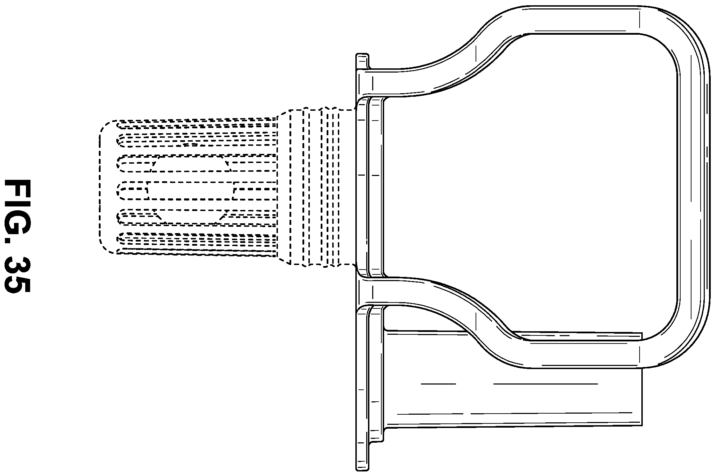

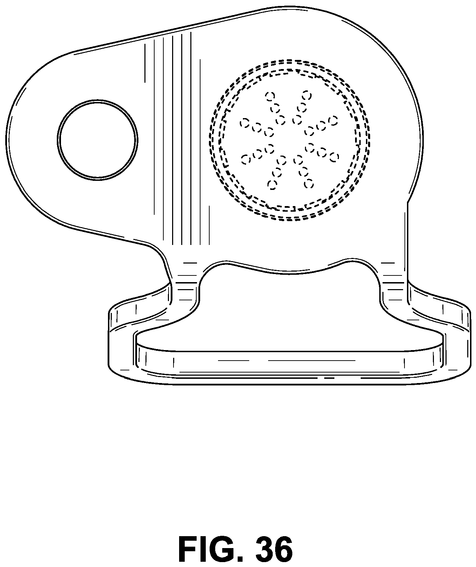

Another representative embodiment is the ornamental design that is depicted in FIGs. 30-36.

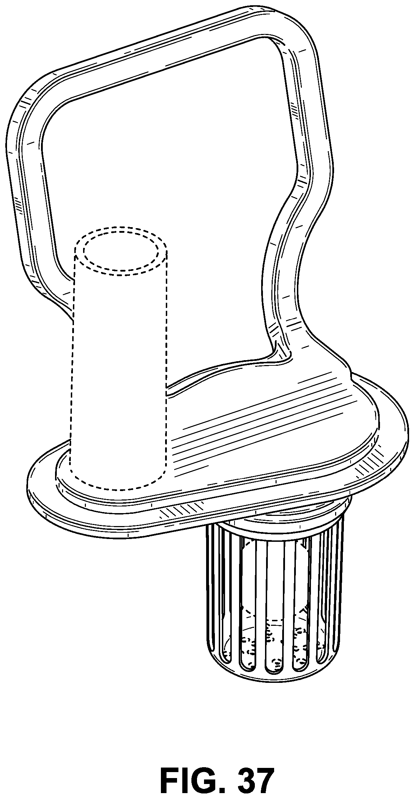

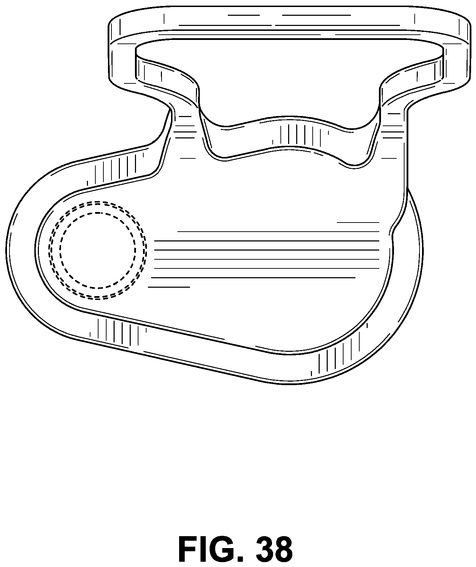

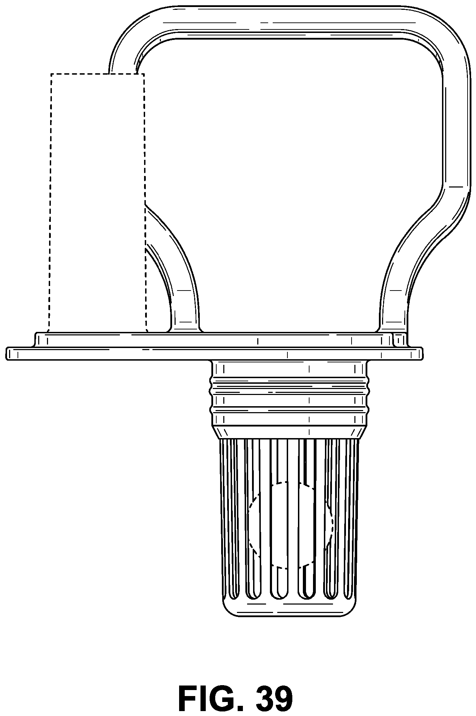

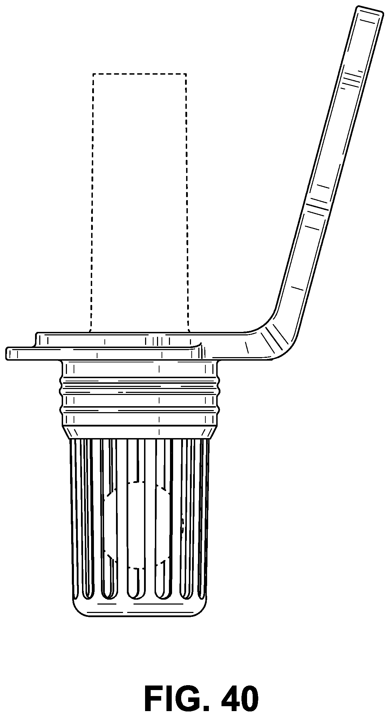

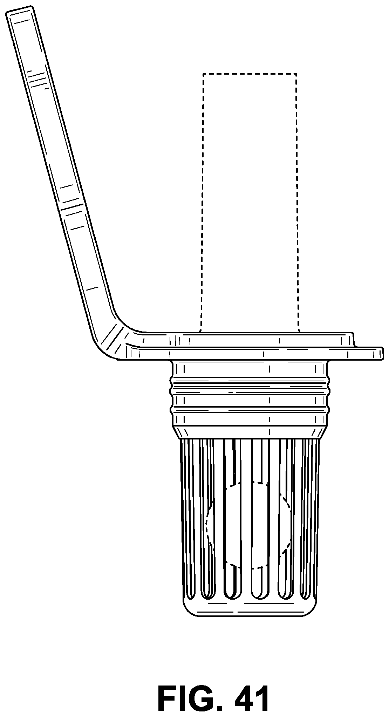

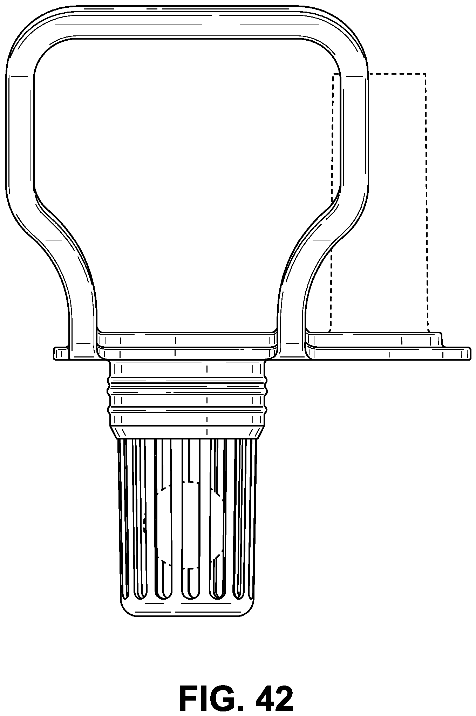

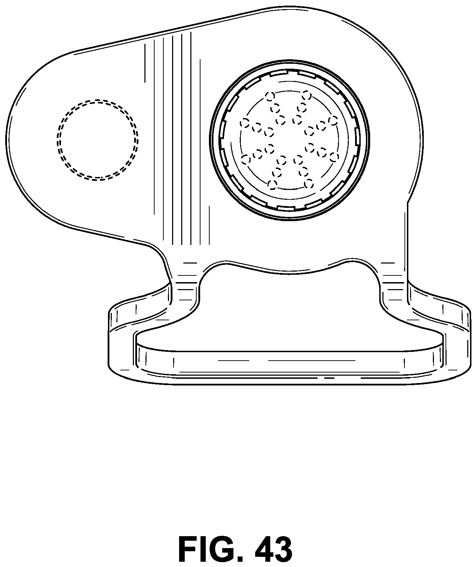

Another representative embodiment is the ornamental design that is depicted in FIGs. 37-43.

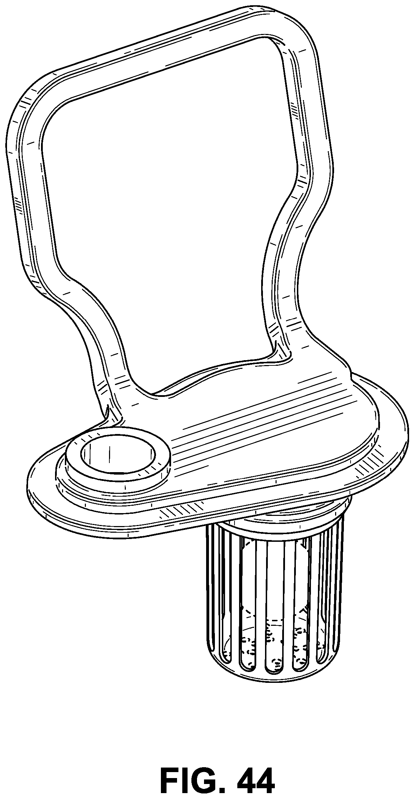

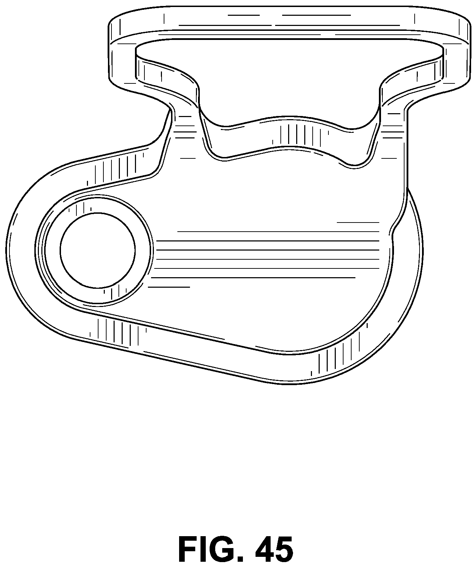

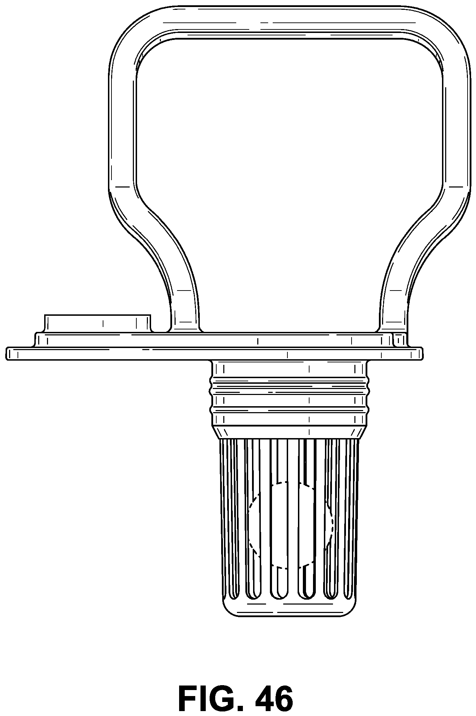

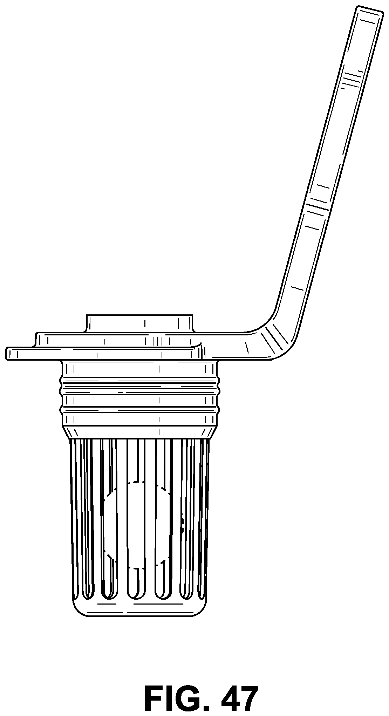

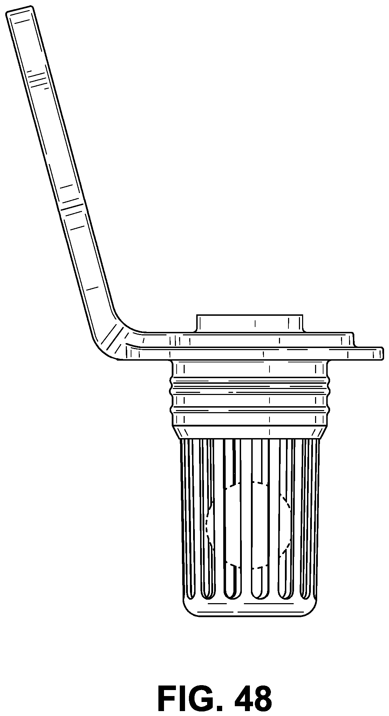

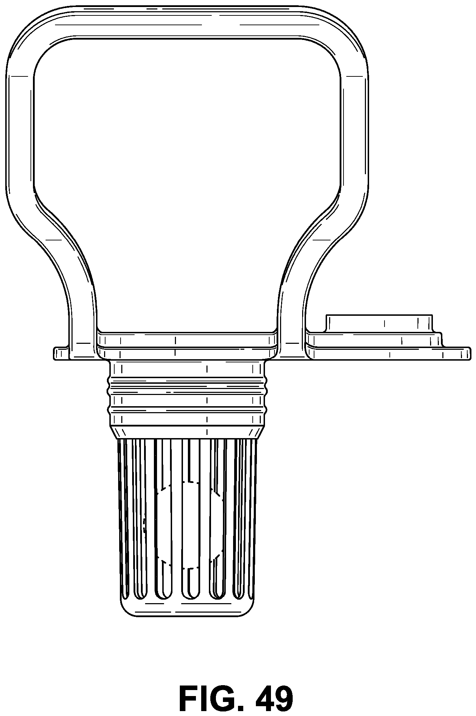

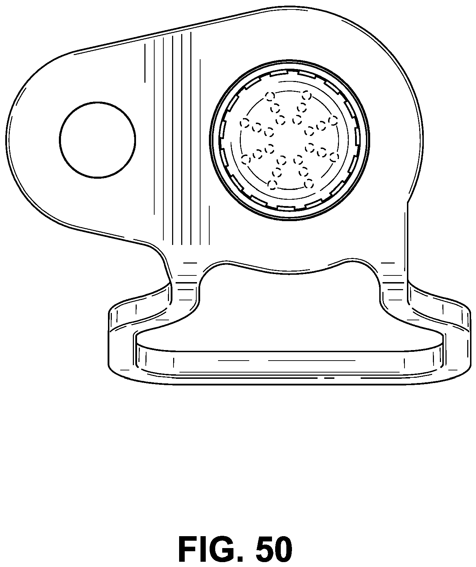

Another representative embodiment is the ornamental design that is depicted in FIGs. 44-50.

Other representative embodiments are provided that are of the scope of the Numbered Paragraphs of the specification below.

Advantages of the present disclosure will become more apparent to those skilled in the art from the following description of the preferred embodiments of the disclosure that have been shown and described by way of illustration. As will be realized, the disclosed subject matter is capable of other and different embodiments, and its details are capable of modification in various respects. Accordingly, the drawings and description are to be regarded as illustrative in nature and not as restrictive.

### BRIEF DESCRIPTION OF DRAWINGS

Fig. 1 shows an upper perspective view of a shipping cap in accordance with a first embodiment.
Fig. 2 shows a lower upper perspective view of the shipping cap of Fig. 1.
Fig. 3 shows a right side view of the shippig cap of Fig. 1.
Fig. 4 shows a left side view of the shipping cap of Fig. 1.
Fig. 5 shows a top view of the shipping cap of Fig. 1.
Fig. 6 shows a bottom view of the shipping cap of Fig. 1.
Fig. 7 shows an example installed front view of two shipping caps in a compressor.
Fig. 8 shows an example installed perspective view of two shipping caps in a compressor.
FIG. 9 is a perspective view of an ornamental design of a shipping cap capable of extending within an opening of a machine or an opening within a component within a machine. The cap includes a trademark ("MAHLE" in this embodiment) that is formed upon the cap that may designate the manufacturer of the machine, or could designate an OEM (original equipment manufacturer) of a vehicle (or larger machine) that includes the machine as a subassembly, or the name of the vehicle or machine or a trademark that is associated with the vehicle or machine that is sold by the OEM. The trademark or language, number(s), letter(s), or symbol(s) or a combination thereof can vary as desired or appropriate for use with the machine. Alternatively instead of a trademark the cap may include instructions for use or removal of the cap formed upon the cap. The view depicts an exemplary desiccant material for use with the cap in broken lines. The desiccant material can be any size or shape that fits within the receptacle.
FIG. 10 is a top view of the cap of FIG. 9;
FIG. 11 is a front view of the cap of FIG. 9;
FIG. 12 is a right side view of the cap of FIG. 9;
FIG. 13 is a left side view of the cap of FIG. 9;
FIG. 14 is a rear side view of the cap of FIG. 9;
FIG. 15 is a bottom view of the cap of FIG. 9.
FIG. 16 is perspective view of an ornamental design of another cap with a portion capable of extending within an opening of a machine (with an exemplary desiccant material for use in the cap depicted in broken lines);
FIG. 17 is a top view of the cap of FIG. 16;
FIG. 18 is a front side view of the cap of FIG. 16;
FIG. 19 is a right side view of the cap of FIG. 16;
FIG. 20 is a left side view of the cap of FIG. 16;
FIG. 21 is a rear side view of the cap of FIG. 16;
FIG. 22 is a bottom view of the cap of FIG. 16.
FIG. 23 is a perspective view of an ornamental design of another cap with a portion capable of extending within an opening of a machine (with an exemplary desiccant material for use in the cap depicted in broken lines);
FIG. 24 is a top view of the cap of FIG. 23;
FIG. 25 is a front side view of the cap of FIG. 23;
FIG. 26 is a right side view of the cap of FIG. 23;
FIG. 27 is a left side view of the cap of FIG. 23;
FIG. 28 is a rear side view of the cap of FIG. 23;
FIG. 29 is a bottom view of the cap of FIG. 23.
FIG. 30 is a perspective view of an ornamental design of another cap with a portion capable of extending within an opening of a machine (with an exemplary desiccant material for use in the cap depicted in broken lines);
FIG. 31 is a top view of the cap of FIG. 30;
FIG. 32 is a front side view of the cap of FIG. 30;
FIG. 33 is a right side view of the cap of FIG. 30;
FIG. 34 is a left side view of the cap of FIG. 30;
FIG. 35 is a rear side view of the cap of FIG. 30;
FIG. 36 is a bottom view of the cap of FIG. 30.
FIG. 37 is a perspective view of an ornamental design of another cap with a portion capable of extending within an opening of a machine (with an exemplary desiccant material for use in the cap depicted in broken lines);
FIG. 38 is a top view of the cap of FIG. 37;
FIG. 39 is a front side view of the cap of FIG. 37;
FIG. 40 is a right side view of the cap of FIG. 37;
FIG. 41 is a left side view of the cap of FIG. 37;
FIG. 42 is a rear side view of the cap of FIG. 37;
FIG. 43 is a bottom view of the cap of FIG. 37.
FIG. 44 is a perspective view of an ornamental design of another cap with a portion capable of extending with an opening of a machine (with an exemplary desiccant material for use in the cap depicted in broken lines);
FIG. 45 is a top view of the cap of FIG. 44;
FIG. 46 is a front side view of the cap of FIG. 44;
FIG. 47 is a right side view of the cap of FIG. 44;
FIG. 48 is a left side view of the cap of FIG. 44;
FIG. 49 is a rear side view of the cap of FIG. 44;
FIG. 50 is a bottom view of the cap of FIG. 44.

### DETAILED DESCRIPTION OF THE INVENTION

While the concepts of the present disclosure are susceptible to various modifications and alternative forms, specific embodiments thereof have been shown by way of example in the drawings and will be described herein in detail. It should be understood, however, that there is no intent to limit the concepts of the present disclosure to the particular forms disclosed, but on the contrary, the intention is to cover all modifications, equivalents, and alternatives consistent with the present disclosure and the appended claims.

References in the specification to "one embodiment," "an embodiment," "an illustrative embodiment," etc., indicate that the embodiment described may include a particular feature, structure, or characteristic, but every embodiment may or may not necessarily include that particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described. Additionally, it should be appreciated that items included in a list in the form of "at least one A, B, and C" can mean (A); (B); (C); (A and B); (A and C); (B and C); or (A, B, and C). Similarly, items listed in the form of "at least one of A, B, or C" can mean (A); (B); (C); (A and B); (A and C); (B and C); or (A, B, and C).

In the drawings, some structural features may be shown in specific arrangements. However, it should be appreciated that such specific arrangements may not be required. Rather, in some embodiments, such features may be arranged in a different manner than shown in the illustrative figures. Additionally, the inclusion of a structural in a particular figure is not meant to imply that such feature is required in all embodiments and, in some embodiments, may not be included or may be combined with other features.

The present disclosure relates to shipping caps generally, and specifically to shipping caps that contain a desiccant material. The purpose of the desiccant is to prevent moisture intrusion into the internal mechanisms of a compressor, motor, pumps, or other equipment during shipping and storage. The equipment may be something that is configured to receive liquid or air within internals of the equipment, such as rotating equipment, or equipment with moving components within a housing of the equipment. during shipping and storage. The shipping cap is removed prior to installation and discarded or reused. The desiccant is contained within the shipping cap and may be replaceable.

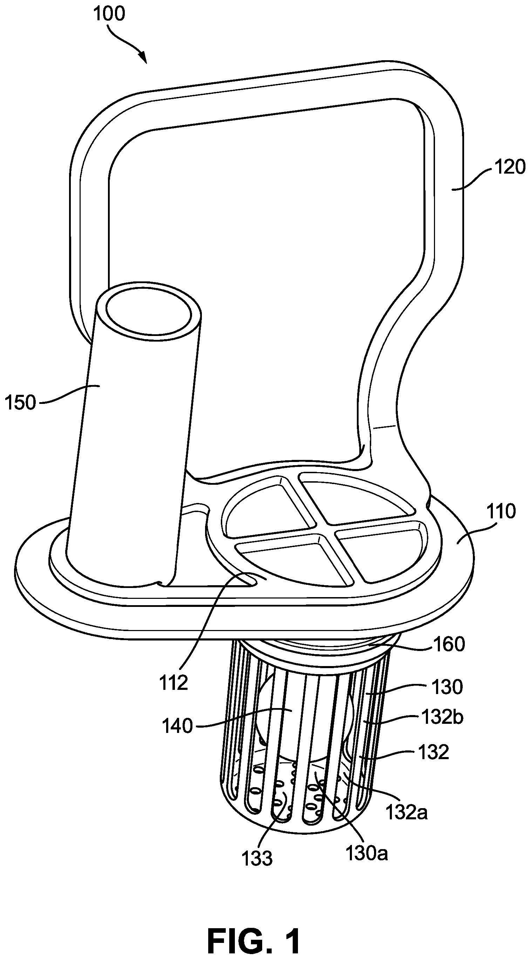

Turning first to Fig. 1, an example embodiment of a shipping cap 100 is shown.

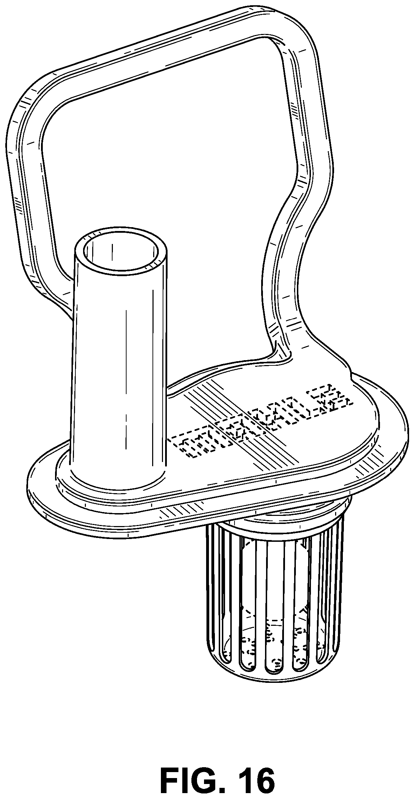

FIGs. 9-50 depict various embodiments of different ornamental designs of the shipping cap 100. The shipping cap 100 can take the ornamental design of any version depicted in FIGs. 9-50, or various combinations of the ornamental designs depicted in FIGs. 9-50 as discussed below. The shipping cap may be as depicted in those figures. The features that are depicted in broken lines in one or more of FIGs. 9-50 are disclaimed from the ornamental design and form no part of the ornamental design for protection, but are provided to depict the environment of the ornamental design, or to depict other unclaimed structures that may exist with the ornamental design that is depicted in solid lines. In other embodiments, ornamental designs that are combinations of the ornamental designs depicted in the figures may be possible, such as a combination of FIGs. 23 and 30 where both the handle (120, as described below) and the desiccant receptacle (130, as described below) are disclaimed from the ornamental design. Another embodiment is possible is a combination of FIGs. 23 and 37 where both the handle (120) and the locating protrusion (150, as described below) are disclaimed from the ornamental design. Another embodiment is possible is a combination of FIGs. 30 and 37 where both the desiccant receptacle (130) and the locating protrusion (150) are disclaimed from the design. Another embodiment is possible is a combination of FIG. 16 and one or more of FIGs. 23, 30, and 37, where a trademark (such as MAHLE as depicted in the figure) is provided and one, two, or all three of the handle (120), the desiccant receptacle (130), and the locating protrusion (150) are disclaimed. In other embodiments, other trademarks or symbols that are trademarks can be provided at or proximate to the location that the trademark MAHLE is provided on FIG. 16. The drawings of these possible different ornamental designs described above would be a combination of the elements depicted and disclaimed in the figures provided herein.

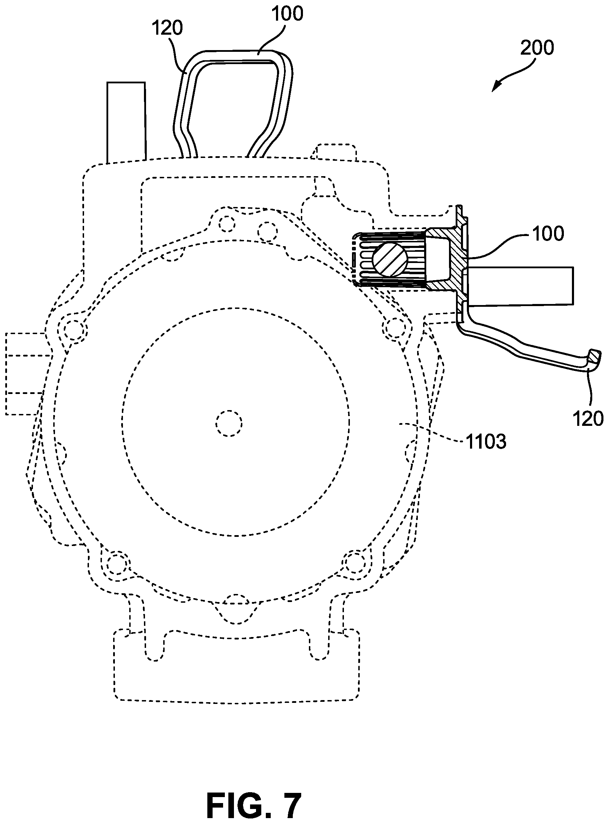

The shipping cap 100 comprises a base 110, a handle 120 connected to the base 110, a desiccant receptacle 130 connected to the base 110 configured to hold a desiccant 140 within an inner volume 130a of the desiccant receptacle 130, and in some optional embodiments, a locating protrusion 150 connected to the base 110. The base 110 further has a first side 112 and a second side 113. The second side 113 is configured to face and in some embodiments make contact with one or more surfaces of the equipment 1103 when the desiccant receptacle 130 extends within an opening into the equipment, as discussed below. The shipping cap 100 further has a sealing portion 160. The sealing portion 160 is located on or extends from the second side 113 of the base. The sealing portion 160 is configured to provide a friction seal with a compressor, motor, or other piece of equipment 1103 (See. Figs. 7-8) that the shipping cap 100 is inserted into. In some optional embodiments, the sealing portion 160 further comprises a gasket, o-ring, or liquid sealant to create a watertight, airtight, or substantially watertight or airtight barrier on the compressor, motor, or other piece of equipment 1103. The term substantially air tight means airtight and also includes di minimus air flow therepast that may occur due to manufacturing tolerances, improper engagement between opposing surfaces, and due to wear of components. One having ordinary skill in the art will recognize that different sizes of shipping caps 100 may be used for equipment 1103 which has inlet and outlet ports having different diameters. More than one shipping cap 100 may be provided upon a single piece of equipment 1103 to enclose more than one air or fluid ports within the equipment 1103, as discussed below.

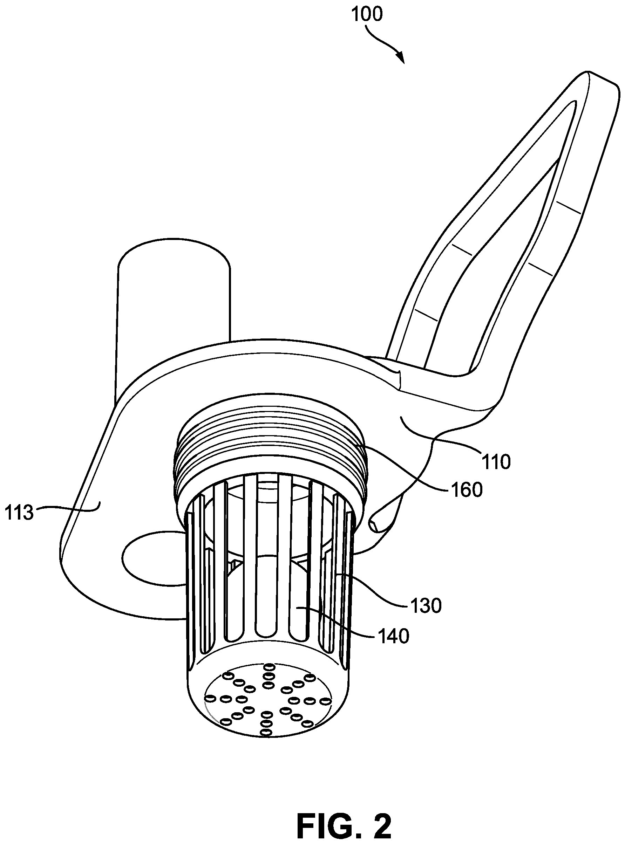

Turning next to Fig. 2, a lower perspective view of the shipping cap 100 is shown. The desiccant receptacle 130 is configured to be removable such that the desiccant 140 can be replaced once it has been depleted during prolonged periods of transportation or storage. Suitable types of desiccants 140 may be selected from the following: silica gel, clay, molecular sieve, calcium oxide, calcium sulfide, or combinations thereof. This disclosure enables one having ordinary skill in the art to select a desiccant 140 suitable to where the equipment 1103 is going to be transported or stored. Alternatively, a portion of the desiccant receptacle 130 may be removed, or opened, to allow access to the inner volume 130a to allow for removing and replacing the desiccant 140.

The desiccant receptacle 130 may further comprise any number of different attachment mechanisms to the shipping cap 100, including but not limited to: a threaded attachment mechanism, a detent attachment mechanism, locking tab mechanism, or a friction fit attachment mechanism. In some optional examples, the desiccant receptacle 130 may be molded into the shipping cap 100 in single use scenarios where the desiccant 140 is not needed to be replaced.

In some embodiments, the desiccant receptacle 130 may have a side wall 132 that encloses the desiccant material 140 therein, and an end plate 133. The side wall 132 may be a wall that is formed into the shape that is the same as or similar to and with an outer cross-section of the opening 1101 of the equipment 1300 that receives the desiccant receptacle 130. For example, in embodiments where the opening 1101, the wall 132 of the desiccant receptacle may also be circular in cross-section with a slightly smaller diameter than the opening 1101. In some embodiments, the side wall may be cylindrical, while in other embodiments, the side wall 132 may be truncated conical or frusto-conical, with a cross-sectional area that decreases from the end proximate to the base 110 toward the end plate 133. This may be beneficial to allow the desiccant receptacle 130 to be installed within openings 1101 in the equipment where space allowed surrounding the opening requires the desiccant receptacle 130 to approach the opening at an angle that is not along the center axis of the opening 1101, but instead at an acute angle with respect to the center axis of the opening 1101.

In some embodiments, the wall 132 may be a solid wall about the circumference. In other embodiments, the wall 132 may be formed from a plurality of ribs 132b that are aligned and supported by the base 110 and the end plate 133. The ribs 132b are aligned with spaces 132a between adjacent ribs that can allow air flow therethrough, but do not allow the desiccant material 140 (or a substantial portion of the desiccant material) to extend out of the inner volume 130a through the spaces 132a. In some embodiments, when the desiccant housing 130 is installed within and opening 1101, as discussed below, air from within the inner volume of the equipment 1300 may interact with the desiccant material through the spaces 132a, as well as the holes 131 in the end plate 133 as discussed below.

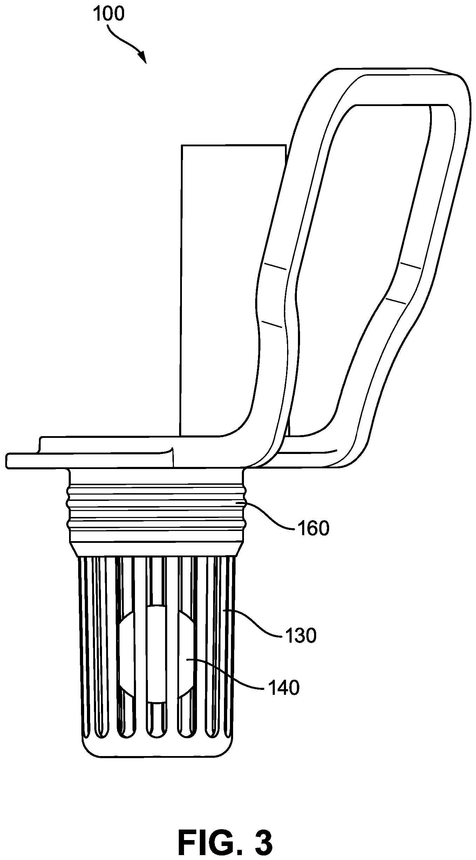

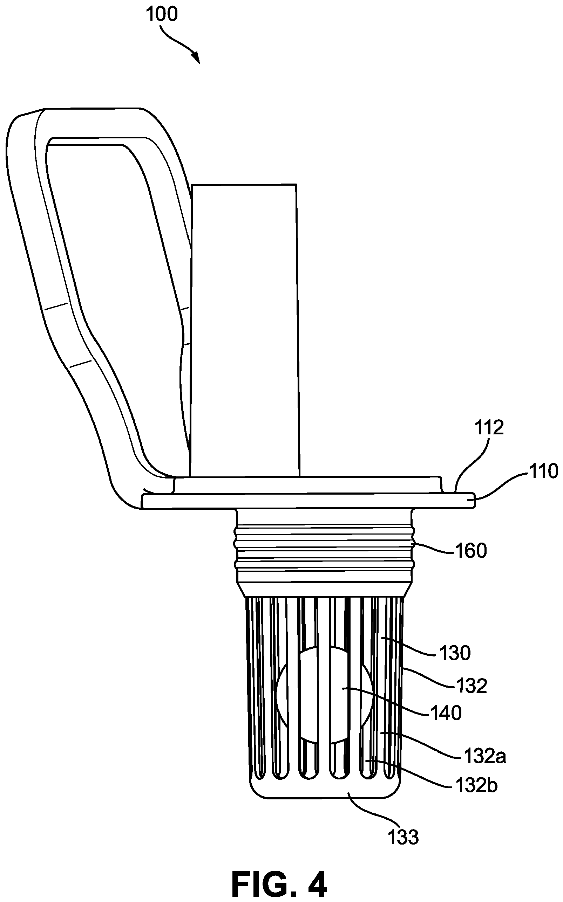

Turning next to Figs. 3-4, a right side view and left side view of the shipping cap 100, are shown, respectively. The shipping cap 100 comprises a base 110, a handle 120 connected to the base 110, a desiccant receptacle 130 connected to the base 110 configured to hold a desiccant 140 within an internal volume 130a thereof, and in some optional embodiments, a locating protrusion 150 connected to the base 110. The shipping cap 100 further has a sealing portion 160.

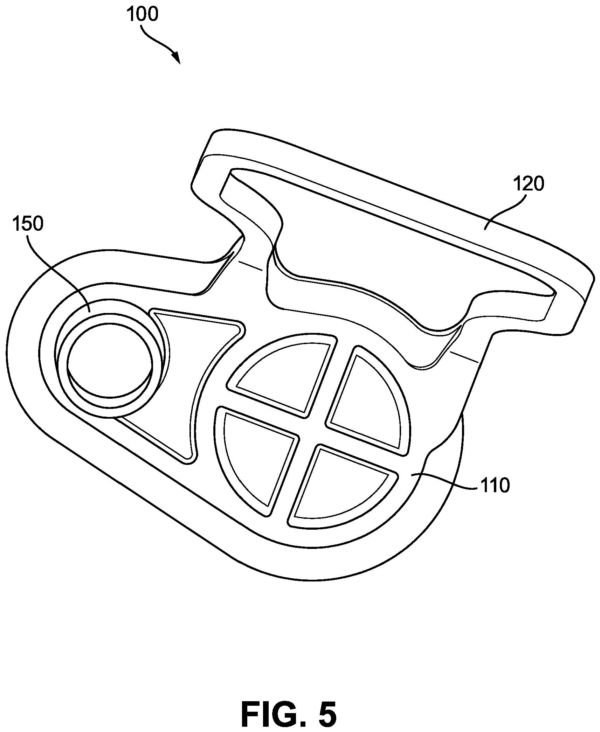

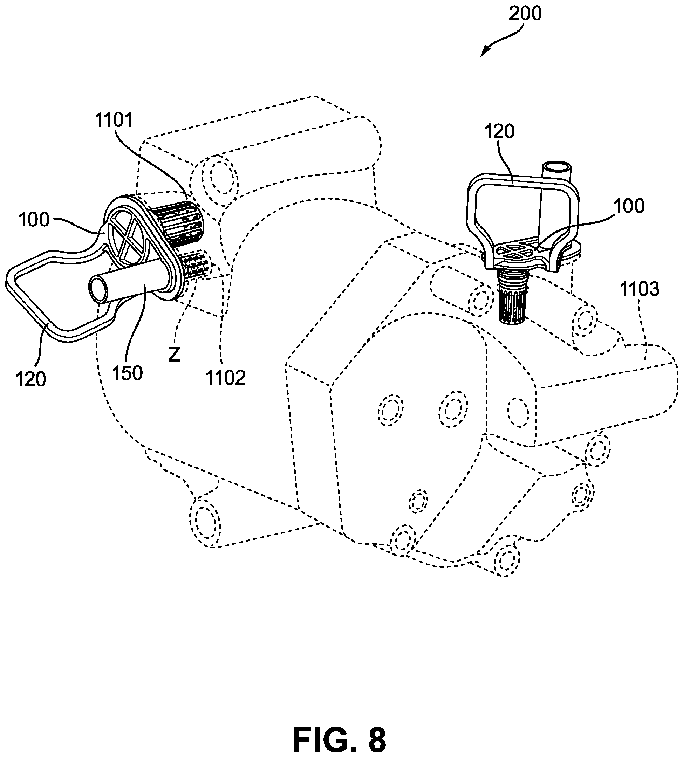

Fig. 5 shows a top view of the shipping cap 100. The handle 120 is configured such that removal from a piece of equipment 1103 is effected by pulling on the handle 120. The locating protrusion 150 is also shown. The locating protrusion 150 is configured to slip over a corresponding protrusion (not shown) on the piece of equipment 1103 to align the desiccant receptacle 130 with the inlet or outlet port of the piece of equipment 1103. This allows the desiccant receptacle 130 to be inserted into the inlet or outlet of the piece of equipment 1103. This further allows the sealing portion 160 to create a seal with the inlet or outlet of the piece of equipment 1103 to prevent as much water or air intrusion as possible. The locating protrusion 150 can also receive a fastener (not shown, but could be a screw, a bolt, or the like, Z - FIG. 8) that when the shipping cap 100 is installed can connect to the equipment (at aperture 1102, FIG. 8) to further fix the shipping cap 100 to the equipment.

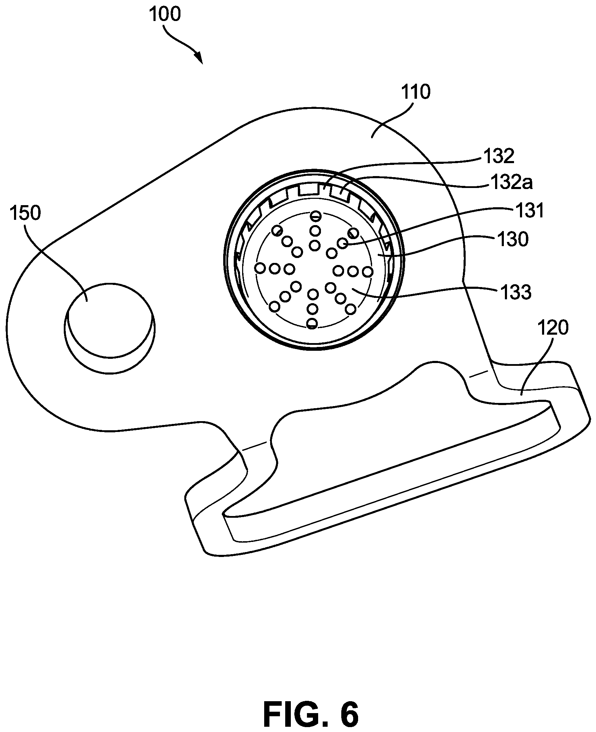

Fig. 6 shows a bottom view of the shipping cap 100 showing the desiccant receptacle 130. The desiccant receptacle 130 further comprises a plurality of openings 131. The plurality of openings 131 in the desiccant receptacle 130 allow any moisture within the internal portions, such as flow paths or operating mechanical equipment, such as impellers or blades, of the piece of equipment 1103 to flow into the inner volume 130a and contact the desiccant 140. This allows any residual moisture the piece of equipment 1103 after manufacture, or any moisture intrusion which may happen during transportation and storage, to be absorbed by the desiccant 140. This prevents any damage to the internal mechanisms of the piece of equipment 1103 during long term storage or shipment.

Turning next to Figs. 7-8, an example shipping cap 100 is shown as it is inserted equipment 1103, forming a sealed piece of equipment 200. The shipping cap 100 may be inserted into the inlet or outlet 1101 of the piece of equipment 1103. Any number of shipping caps 100 may be inserted into a piece of equipment 1103. For example, if there are multiple inlet and outlet ports 1101 in a piece of equipment 1103, each port 1101 would need to be plugged in order to seal the internal mechanism and allow the desiccant to remove and protect the internal mechanism of the piece of equipment 1103.

It is to be understood that the invention is not limited to the exact details of construction, operation, exact materials or embodiments shown and described, as obvious modifications and equivalents will be apparent to one skilled in the art. While the specific embodiments have been illustrated and described, numerous modifications come to mind without significantly departing from the spirit of the invention, and the scope of protection is only limited by the scope of the accompanying Claims.

The specification can be best understood with reference to the following Numbered Paragraphs:
Numbered Paragraph 1. An apparatus for sealing a port on a piece of rotating equipment, the apparatus comprising:
   a base having a first side and a second side;
   a handle connected to a first side of the base;
   a locating protrusion connected to a first side of the base; and
   a desiccant receptacle connected to a second side of the base;
      wherein the desiccant receptacle is configured to accept a desiccant.
Numbered Paragraph 2. The apparatus of Numbered Paragraph 1, further comprising a seal.
Numbered Paragraph 3. The apparatus of Numbered Paragraph 2, wherein the seal is a gasket, o-ring, or liquid sealant.
Numbered Paragraph 4. The apparatus of any one of Numbered Paragraphs 1-3, wherein the desiccant is selected from the following: silica gel, clay, molecular sieve, calcium oxide, calcium sulfide, or combinations thereof.
Numbered Paragraph 5. The apparatus of any one of Numbered Paragraphs 1-4, wherein the desiccant further comprises a replaceable desiccant.
Numbered Paragraph 6. The apparatus of any one of Numbered Paragraphs 1-5, wherein the desiccant receptacle is connected to a second side of the base with a threaded attachment mechanism, a detent attachment mechanism, locking tab mechanism, or a friction fit attachment mechanism.
Numbered Paragraph 7. A method for controlling moisture in a piece of rotating equipment, the method comprising:
   providing a shipping cap configured to form a seal; and
      wherein the shipping cap comprises:
      a base having a first side and a second side;
      a handle connected to a first side of the base;
      a locating protrusion connected to a first side of the base; and
      a desiccant receptacle connected to a second side of the base;
         wherein the desiccant receptacle is configured to accept a desiccant;
   inserting the shipping cap into an inlet or an outlet port on a piece of rotating equipment.
Numbered Paragraph 8. The method of Numbered Paragraph 7, further comprising a seal.
Numbered Paragraph 9. The method of Numbered Paragraph 7, wherein the seal is a gasket, o-ring, or liquid sealant.
Numbered Paragraph 10. The method of any one of Numbered Paragraphs 7-9, wherein the desiccant is selected from the following: silica gel, clay, molecular sieve, calcium oxide, calcium sulfide, or combinations thereof.
Numbered Paragraph 11. The method of any one of Numbered Paragraphs 7-10, further comprising replacing the desiccant in the shipping cap when the desiccant is depleted.
Numbered Paragraph 12. The method of any one of Numbered Paragraphs 7-11, wherein the desiccant receptacle is connected to a second side of the base with a threaded attachment mechanism, a detent attachment mechanism, locking tab mechanism, or a friction fit attachment mechanism.
Numbered Paragraph 13. The ornamental design for a cap for machine opening as depicted in FIGs. 9-15. The ornamental design is depicted in solid lines in the drawings. Any broken or phantom lines in the drawings form no part of the claimed design.
Numbered Paragraph 14. The ornamental design for a cap for machine opening as depicted in FIGs. 16-22. The ornamental design is depicted in solid lines in the drawings. Any broken or phantom lines in the drawings form no part of the claimed design.
Numbered Paragraph 15. The ornamental design for a cap for machine opening as depicted in FIGs. 23-29. The ornamental design is depicted in solid lines in the drawings. Any broken or phantom lines in the drawings form no part of the claimed design.
Numbered Paragraph 16. The ornamental design for a cap for machine opening as depicted in FIGs. 30-36. The ornamental design is depicted in solid lines in the drawings. Any broken or phantom lines in the drawings form no part of the claimed design.
Numbered Paragraph 17. The ornamental design for a cap for machine opening as depicted in FIGs. 37-43. The ornamental design is depicted in solid lines in the drawings. Any broken or phantom lines in the drawings form no part of the claimed design.
Numbered Paragraph 18. The ornamental design for a cap for machine opening as depicted in FIGs. 44-50. The ornamental design is depicted in solid lines in the drawings. Any broken or phantom lines in the drawings form no part of the claimed design.
Numbered Paragraph 19. The ornamental design for a cap for machine opening as depicted in a combination of the ornamental design of FIGs. 23-29 and 30-36, where the ornamental design disclaims the features disclaimed (with broken lines) in both sets of figures. The ornamental design is depicted in solid lines in the drawings. Any broken or phantom lines in the drawings form no part of the claimed design.
Numbered Paragraph 20. The ornamental design for a cap for machine opening as depicted in a combination of the ornamental design of FIGs. 23-29 and 37-43, where the ornamental design disclaims the features disclaimed (with broken lines) in both sets of figures. The ornamental design is depicted in solid lines in the drawings. Any broken or phantom lines in the drawings form no part of the claimed design.
Numbered Paragraph 21. The ornamental design for a cap for machine opening as depicted in a combination of the ornamental design of FIGs. 23-29 and 37-43, where the ornamental design disclaims the features disclaimed (with broken lines) in both sets of figures. The ornamental design is depicted in solid lines in the drawings. Any broken or phantom lines in the drawings form no part of the claimed design.
Numbered Paragraph 22. The ornamental design for a cap for machine opening as depicted in a combination of the ornamental design of FIGs. 23-29, 30-36, and 37-43 where the ornamental design disclaims the features disclaimed (with broken lines) in all three sets of figures. The ornamental design is depicted in solid lines in the drawings. Any broken or phantom lines in the drawings form no part of the claimed design.
Numbered Paragraph 23. The ornamental design for a cap for machine opening as depicted in a combination of the ornamental design of one of the sets of FIGs. 23-29, 30-36, and 37-43, or in a combination of two or more of these figures as described in Numbered Paragraphs 19-22 above, where, the ornamental design includes a word, number, symbol, or trademark in the position upon the ornamental design similar to how the trademark "MAHLE" is depicted and as positioned in FIGs. 16-22. The ornamental design is depicted in solid lines in the drawings. Any broken or phantom lines in the drawings form no part of the claimed design.
Numbered Paragraph 24. An apparatus for sealing a port on a piece of rotating equipment, the apparatus comprising:
   a base having a first side and a second side;
   a handle connected to a first side of the base;
   a locating protrusion connected to a first side of the base; and
   a desiccant receptacle connected to a second side of the base;
   wherein the desiccant receptacle is configured to accept a desiccant.
Numbered Paragraph 25. The apparatus of Numbered Paragraph 24, further comprising a seal.
Numbered Paragraph 26. The apparatus of Numbered Paragraph 25, wherein the seal is a gasket, o-ring, or liquid sealant.
Numbered Paragraph 27. The apparatus of Numbered Paragraph 24, wherein the desiccant is selected from the following: silica gel, clay, molecular sieve, calcium oxide, calcium sulfide, or combinations thereof.
Numbered Paragraph 28. The apparatus of Numbered Paragraph 24, wherein the desiccant further comprises a replaceable desiccant.
Numbered Paragraph 29. The apparatus of Numbered Paragraph 24, wherein the desiccant receptacle is connected to a second side of the base with a threaded attachment mechanism, a detent attachment mechanism, locking tab mechanism, or a friction fit attachment mechanism.
Numbered Paragraph 30. A method for controlling moisture in a piece of rotating equipment, the method comprising:
   providing a shipping cap configured to form a seal; and
   wherein the shipping cap comprises:
      a base having a first side and a second side;
      a handle connected to a first side of the base;
      a locating protrusion connected to a first side of the base; and
      a desiccant receptacle connected to a second side of the base;
      wherein the desiccant receptacle is configured to accept a desiccant;
         inserting the shipping cap into an inlet or an outlet port on a piece of rotating equipment.
Numbered Paragraph 31. The method of Numbered Paragraph 30, further comprising a seal.
Numbered Paragraph 32. The method of Numbered Paragraph 30, wherein the seal is a gasket, o-ring, or liquid sealant.
Numbered Paragraph 33. The method of Numbered Paragraph 30, wherein the desiccant is selected from the following: silica gel, clay, molecular sieve, calcium oxide, calcium sulfide, or combinations thereof.
Numbered Paragraph 34. The method of Numbered Paragraph 30, further comprising replacing the desiccant in the shipping cap when the desiccant is depleted.
Numbered Paragraph 35. The method of Numbered Paragraph 30, wherein the desiccant receptacle is connected to a second side of the base with a threaded attachment mechanism, a detent attachment mechanism, locking tab mechanism, or a friction fit attachment mechanism.

## Claims

1. An apparatus for sealing a port on a piece of rotating equipment, the apparatus comprising:
a base (110) having a first side (112) and a second side (113);
a handle (120) connected to a first side (112) of the base (110);
a locating protrusion (150) connected to a first side (112) of the base (110); and
a desiccant receptacle (130) connected to a second side (113) of the base (110);
wherein the desiccant receptacle (130) is configured to accept a desiccant.

2. The apparatus of claim 1, further comprising a seal (160).

3. The apparatus of claim 2, wherein the seal (160) is a gasket, o-ring, or liquid sealant.

4. The apparatus of any one of claims 1-3, wherein the desiccant (140) is selected from the following: silica gel, clay, molecular sieve, calcium oxide, calcium sulfide, or combinations thereof.

5. The apparatus of any one of claims 1-4, wherein the desiccant (140) further comprises a replaceable desiccant.

6. The apparatus of any one of claims 1-5, wherein the desiccant receptacle (130) is connected to a second side (113) of the base (110) with a threaded attachment mechanism, a detent attachment mechanism, locking tab mechanism, or a friction fit attachment mechanism.

7. A method for controlling moisture in a piece of rotating equipment, the method comprising:
providing a shipping cap (100) configured to form a seal; and
wherein the shipping cap (100) comprises:
a base (110) having a first side (112) and a second side (113);
a handle (120) connected to a first side (112) of the base (110);
a locating protrusion (150) connected to a first side (112) of the base (110); and
a desiccant receptacle (130) connected to a second side (113) of the base (110);
wherein the desiccant receptacle (130) is configured to accept a desiccant (140);
inserting the shipping cap into an inlet or an outlet port on a piece of rotating equipment.

8. The method of claim 7, further comprising a seal (160).

9. The method of claim 7, wherein the seal (160) is a gasket, o-ring, or liquid sealant.

10. The method of any one of claims 7-9, wherein the desiccant (140) is selected from the following: silica gel, clay, molecular sieve, calcium oxide, calcium sulfide, or combinations thereof.

11. The method of any one of claims 7-10, further comprising replacing the desiccant (140) in the shipping cap (100) when the desiccant is depleted.

12. The method of any one of claims 7-11, wherein the desiccant receptacle (130) is connected to a second side (113) of the base (110) with a threaded attachment mechanism, a detent attachment mechanism, locking tab mechanism, or a friction fit attachment mechanism.
